# EUROPÄISCHE PATENTSCHRIFT

(11) **EP 1 581 588 B1**
(45) Veröffentlichungstag und Bekanntmachung des Hinweises auf die Patenterteilung: **28.02.2007**
(21) Anmeldenummer: 04700685.3
(22) Anmeldetag: 08.01.2004
(51) Int. Cl.: C08K 9/06, C01B 33/44

(54) **ZUSAMMENSETZUNG AUF DER BASIS PRÄEXFOLIERTER NANOCLAYS UND IHRE VERWENDUNG**
COMPOSITION BASED ON PRE-EXFOLIATED NANOCLAY AND USE THEREOF
COMPOSITION A BASE DE NANO-ARGILES PRE-EXFOLIES ET LEUR UTILISATION

(30) Priorität: 08.01.2003 GB 0300374; 12.06.2003 DE 10326977
(43) Veröffentlichungstag der Anmeldung: 05.10.2005
(73) Patentinhaber: SÜD-CHEMIE AG, 80333 München (DE)
(72) Erfinder: METZEMACHER, Heinz-Dieter, 50737 Köln (DE); SEELING, Rainer, 50189 Elsdorf-Grouver (DE)
(74) Vertreter: Westendorp, Michael Oliver
(86) Internationale Anmeldenummer: PCT/EP2004/000072
(87) Internationale Veröffentlichungsnummer: WO 2004/063260

(56) Entgegenhaltungen:
- DE-A- 19 921 472
- US-B1- 6 380 295
- ISHIDA H. ET AL.: "General Approach to Nanocomposite Preparation" CHEMISTRY OF MATERIALS, Bd. 12, Nr. 5, 2000, Seiten 1260-1267, XP002283069

## Beschreibung

Die Erfindung betrifft Zusammensetzungen, insbesondere Masterbatche auf der Basis von organisch interkaliertem Nanoclay, erfindungsgemäße Verwendungen dieser Masterbatche und ein Verfahren zu ihrer Herstellung.

Die Möglichkeit einer Eigenschaftsverbesserung von Kunststoffen oder allgemein polymeren Werkstoffen mittels Nanoclays als Füllstoffen ist schon länger bekannt. Als wesentliche Quelle dieser Nanoclays sind dabei wasserquellbare natürliche oder synthetische Schichtsilikate zu nennen. Bei der Quellung im Wasser lösen sich Schichtplättchen im Nano-Bereich ab, wodurch regelrechte Netzwerke entstehen. Polymere oder allgemein langkettige Ionen oder andere geladene Teilchen können in die Zwischenschichten eindringen, was als Interkalation bezeichnet wird.

Um die so interkalierten Nanoclays technisch einsetzen zu können, müssen sie unter Einsatz weiterer Quellmittel exfoliert werden. Bei dieser Exfolierung geht die ursprüngliche Nahordnung in den Schichtsilikaten verloren. Vollständig exfolierte Smectite, wie der Montmorillonit als Beispiel eines solchen Schichtsilikats, können Teilchengrößen mit einem sehr hohen Aspektverhältnis von bis zu 1000 ausbilden, erhalten durch Schichten mit ca. 1 nm Durchmesser, ca. 100 nm Weite und 500 - 1000 nm Länge.

Für die Zwecke dieser Anmeldung werden unter dem Begriff Nanoclay immer organisch interkalierte Schichtsilikate verstanden. Dies entspricht dem allgemeinen Verständnis auf diesem Gebiet. Solche Nanoclays sind kommerziell erhältlich. Unter der Bezeichnung "Nanofil" vertreibt die Südchemie AG einen Nanoclay auf Montmorillonitbasis. Als Beispiele sind "Nanofil 15" und "Nanofil 5" zu nennen, die mit Distearoyldimethyl-ammoniumchlorid organisch interkaliert sind. Ein als "EA 108" bezeichnetes Produkt der US-amerikanischen Firma Elementis Corp. basiert auf Hectorit.

Für die Verwendung dieser Nanoclays in der kunststoffverarbeitenden Industrie besteht das chemische Problem, daß die natürlichen oder synthetischen Schichtsilikate zunächst organophil gemacht werden müssen, damit sie mit den hydrophoben Kunststoffen verarbeitbar sind. Als ein wesentliches Verfahren für diese organophile Modifizierung der Schichtsilikate hat der Kationenaustausch Bedeutung erlangt. Der Kationenaustausch wird in der wäßrigen Phase mit kationischen Tensiden auf der Basis von Ammonium-, Phosphonium- oder Sulfonium-Tensiden durchgeführt.
Als ein weiteres Verfahren ist auch die Säureaktivierung bekannt. Hierbei wird z. B. Salzsäure verwendet.

Nanoclays haben als Additive in halogenfreien Flammschutzmitteln Bedeutung erlangt. So wird in der DE-A-199 21 472 eine flammgeschützte Polymerzusammensetzung offenbart, die ein thermoplastisches oder vernetzbares Polymer, Magnesium,- Calcium-, Zink und/oder Aluminiumhydroxid und/oder deren Doppelhydroxide als halogenfreien Füllstoff und zusätzlich ein organisch interkaliertes Schichtsilikat auf der Basis quellfähiger Smectite enthält.

Die US 6,380,295 B1 beschreibt und beansprucht ein ionenausgetauschtes Reaktionsprodukt, das durch Interkalation und Reaktion von einem smektitischem Ton, einer quaternärer Ammoniumverbindung und einem oder mehreren nicht-anionischen Polymeren, ausgewählt aus der Gruppe der Polyurethane, Polyamide, Polyester, Polycarbonate, Polyepoxide und Polyolefine hergestellt wird.
Ishida H. et al. "General Approach to Nanocomposite Preparation", Chemistry of Materials, Bd. 12, Nr. 5, 2000, Seiten 1260-1267, offenbart u.a. die Modifikation eines Bentonits mit Polydimethylsiloxan und Poly(styrolacrylonitril).

Nanoclays werden bevorzugt als Additive in halogenfreien Flammenschutzmitteln eingesetzt, weil sie die Bildung einer stabilen Krustenschicht während der Verbrennung des Polymers fördern. Die Bildung einer solchen Krustenschicht verhindert das weitere Entzünden des Polymers, das Zusammenfallen oder Abtropfen des brennenden Polymers, wodurch die Ausbreitung des Feuers verstärkt werden könnte.

Bei den Nanoclay-Füllstoffen ist es zur Entfaltung ihrer Wirksamkeit erforderlich, sie in dem Polymer, in das sie eingebracht werden sollen, zu exfolieren. Es hat sich im Stand der Technik jedoch gezeigt, daß sich die Anwesenheit der hierfür benötigten Quellmittel während der Compoundierung vor allem dann als verfahrenstechnisch problematisch ergibt, wenn organische Lösungsmittel eingesetzt werden. Auch konventionelle Haftvermittler, wie funktionalisierte Silane, können herkömmlich nicht eingesetzt werden.

Im fertigen Polymer zeigte sich bisher als ungünstig, daß bei dem Einsatz von Nanoclay-Füllstoffen die mechanischen Eigenschaften und die Extrudierfähigkeit von Polymerzusammensetzungen erheblich leiden. Die Nanoclay-Füllstoffe bereiten Schwierigkeiten während der Einarbeitung in die jeweilige Polymerzusammensetzung. Da sie nur schwer zu exfolieren sind, konnten sie bisher auch nur schwer gleichmäßig über die gesamte Polymerzusammensetzung verteilt werden. Dadurch und durch ihre bisher noch hohen Kosten blieb ihr Einsatzgebiet beschränkt. Zusätzliche Probleme entstehen im elektrischen Bereich. Insbesondere in Salzwasser führten Tauchversuche mit 300 V über mehrere Tage zum Ausfall des Polymers durch Lichtbogenbildung.

Davon ausgehend lag der vorliegenden Erfindung die Aufgabe zugrunde, Nanoclay-Füllstoffe so bereitzustellen, daß sie gleichmäßig in unterschiedlichen polymeren Werkstoffen zu verteilen sind, deren Eigenschaften, insbesondere im Hinblick auf die Präexfolierung bzw. die Exfolierung nach Einarbeitung in das gewünschte Polymer zu verbessern, und den Einsatz von Nanoclay-Füllstoffen neuen Anwendungsgebieten zuzuführen, unter Reduzierung der für ihre Verwendung aufzubringenden Kosten und damit Erhöhung ihrer Wirtschaftlichkeit.

Gelöst wird diese Aufgabe durch eine Zusammensetzung gemäß Anspruch 1. Die Erfindung betrifft somit eine Zusammensetzung, insbesondere eine pulverförmige Masterbatch, enthaltend mindestens einen Nanoclay auf der Basis eines quellfähigen anorganischen Schichtmaterials, wobei der Nanoclay mit mindestens einer Siloxan-Komponente (A) und mindestens einem nicht-anionischen Fettsäurederivat (Komponente (B)), das mindestens einen aliphatischen oder cyclischen Rest mit 6 bis 32 Kohlenstoffatomen aufweist, modifiziert worden ist.

Der Begriff Masterbatch ist in der Chemie an sich bekannt und bezeichnet eine Vormischung, die zunächst angefertigt und dann in einem Produktionsprozeß oder Verfahrensablauf eingesetzt wird. Im Rahmen der vorliegenden Erfindung hat es sich gezeigt, daß die im Stand der Technik bekannten Nachteile vermieden werden können, wenn zunächst der pulverförmige Masterbatch hergestellt und als eine vorbereitete Einheit in einem Polymer oder einer Polymerzusammensetzung, was auch ein Kunststoff sein kann, als Füllstoff zur Modifizierung der Eigenschaften eingesetzt wird.

Das im Masterbatch enthaltene Nanoclay weist eine mittlere Teilchengröße von 0,1 bis 1000 µm, bevorzugt von 0,1 bis 100 µm, besonders bevorzugt von 1 bis 15 µm und ganz besonders bevorzugt von 2 bis 10 µm auf.

Das Nanoclay kann gemahlenes Nanoclay enthalten oder vollständig gemahlen sein. Das Mahlen als solches ist ein bekannter Verarbeitungsprozeß, der einen hohen Durchsatz ermöglicht und damit hohe Ausbeuten an gemahlenem Nanoclay zur Verfügung stellt. An das Mahlen selbst sind keine besonderen Anforderungen zu stellen. Es kann mittels Jet-Mühle, Kugelmühle, insbesondere aber durch eine Schwingmühle, Walzenmühle, Schlagmühle, Schlagprallmühle, Reibmühle oder Stiftmühle erfolgen.

Gemahlenes Nanoclay, bei dem die mittlere Teilchengröße unter die Teilchengröße der im Handel erhältlichen Nanoclays gesenkt wird, ist insbesondere dann von großem Vorteil, wenn dadurch ein Masterbatch hergestellt wird, der zusammen mit halogenfreien Füllstoffen in Polymerzusammensetzungen für die Verwendung als Flammschutzmittel dient. Obwohl die Nanoclays dann auf eine mittlere Teilchengröße reduziert worden sind, von der an sich angenommen werden muß, daß sie keine gewünschte Wirkung mehr erzielen, läßt sich erstaunlicherweise bei Einsatz eines solchen Masterbatches dennoch feststellen, daß die mechanischen sowohl als auch die Verarbeitungseigenschaften der Polymerzusammensetzung deutlich verbessert werden.
Diese Verbesserung der mechanischen und der Verarbeitungseigenschaften ermöglicht eine höhere Beladung der Polymerzusammensetzung mit flammhemmendem, vorzugsweise halogenfreiem Füllstoff bei gleichbleibenden mechanischen Eigenschaften und gleichbleibender Verarbeitungsqualität.

Auf der anderen Seite kann aber auch eine geringere Beladung mit dem flammhemmenden Füllstoff bevorzugt werden, um dadurch die mechanischen Eigenschaften und die Verarbeitungsqualität noch zu verbessern, ohne gleichzeitig eine Verschlechterung der flammhemmenden Eigenschaften der Polymerzusammensetzungen zu bewirken. Auf die erfindungsgemäße Verwendung des pulverförmigen Masterbatches für die flammhemmende Ausrüstung von Polymeren bzw. Polymerzusammensetzungen wird weiter unten noch eingegangen.

Vorzugsweise ist das anorganische Schichtmaterial ausgewählt aus natürlichen oder synthetischen Schichtsilikaten. Als solche Schichtsilikate sind insbesondere die Smectite, zu denen der Montmorillonit, Hektorit, Saponit und Beidellit gehören, zu nennen. Auch Bentonit kann eingesetzt werden.

Zur organischen Interkalation geeigente Verbindungen sind dem Fachmann geläufig. Insbesondere können quaternäre Onium-Verbindungen, vorzugsweise quaternäre Ammoniumverbindungen verwendet werden. Geeignete Verbindungen umfassen auch protonierte Amine, organische Phosphoniumionen und/oder Aminocarbonsäuren.

Also Siloxan-Komponente kann jedes oligomere (nach IUPAC-Richtlinien) oder polymere Siloxan oder Siloxanderivat verwendet. Siloxanderivate sind dabei vorzugsweise solche, bei der mindestens eine der CH₃-Seitengruppen am Si-Atom durch eine andere funktionelle Gruppe ersetzt ist. Beispiele einzelner Verbindungen aus allgemein geeigneten Siloxanderivatgruppen sind in den Beispielen angegeben. Besonders bevorzugt sind, ohne Beschränkung, Oligoalkylsiloxane, Polydialkylsiloxane, Polyalkylarylsiloxane, Polydiarylsiloxane, oder deren beliebige Mischungen, wobei die genannten Siloxanderivate besonders bevorzugt mit zumindest einer reaktiven Gruppe funktionalisiert worden sind, ausgenommen hydrolysierbare Silane.
Das mindestens eine nicht-anionische Fettsäurederivat, das mindestens einen aliphatischen oder cyclischen Rest mit 6 bis 32 Kohlenstoffatomen, vorzugsweise 8 bis 22 Kohlenstoffatomen, insbesondere 10 bis 18 Kohlenstoffatomen aufweist, ist bevorzugt ein Fettsäurederivat aus einer der nachstehenden Stoffklassen:
1. Fettalkohole, gesättigt oder ungesättigt, einschließlich primärer als auch sekundärer Alkohole, insbesondere mit C₆ - C₂₂-Resten;
2. Fettaldehyde, Fettketone 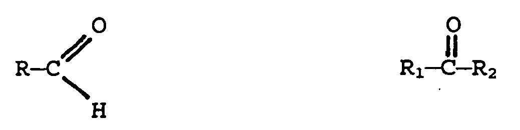 wobei R bzw. R₁ und/oder R₂ einen Rest mit 6 bis 32 C-Atomen darstellt;
3. Fettalkoholpolyglykolether

   R-(O-CH₂-CH₂)-OH

   wobei R einen Rest mit 6 bis 32 C-Atomen darstellt;
4. Fettamine

   R-NH₂, R₁-NH-R₂, R-N(CH₃)₂

   wobei R bzw. R₁ und/oder R2 einen Rest mit 6 bis 32 C-Atomen darstellt;
5. Mono-, Di- und Triglyceridester 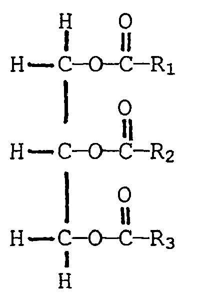 wobei vorzugsweise ein Rest aus R₁, R₂ und R₃ auch weniger als 6 C-Atome aufweisen kann.
6. Fettsäurealcanolamide 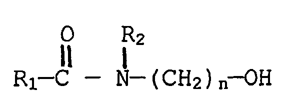 wobei vorszugsweise R₁ und R2 Reste mit 6 bis 32 C-Atomen darstellen, und n = 1 bis 6;
7. Fettsäureamide 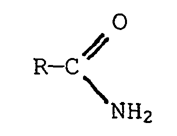 wobei R einen Rest mit 6 bis 32 C-Atomen darstellt;
8. Fettsäurealkylester 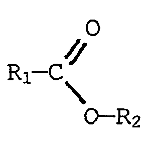 wobei R₁ einen Rest mit 6 bis 32 C-Atomen darstellt und R₂ auch weniger als 6 C-Atome aufweisen kann
9. Fettsäureglucamide 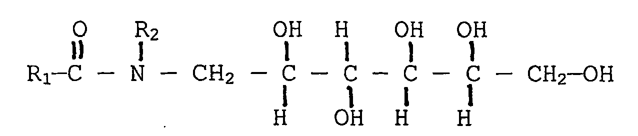 wobei vorzugsweise R₁ und R₂ Reste mit 6 bis 32 C-Atomen darstellen;
10. Wachse
11. Dicarbonsäureester 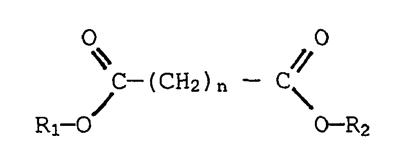 wobei vorzugsweise R₁ und R₂ aliphatische Reste mit 6 bis 32 C-Atomen darstellen und n = 1-6;
12. wasserunlösliche fettsaure Seifen (hierunter sind die Salze aus langkettigen Carbonsäuren mit zweiwertigen Metallen zu verstehen) 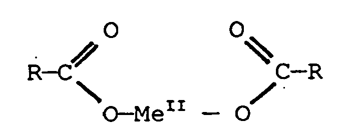 wobei mindestens einer von R 6 bis 32 C-Atome aufweist und Me^{II} ein zweiwertiges Metall darstellt;
13. Montanwachse (hierunter sind Wachse mit einer Kettenlänge von C₂₆ bis C₃₂ zu verstehen);
14. Paraffine und PE-Wachse.

Besonders bevorzugt sind Fettalkohole, Fettamine, Triglyceridester, Fettsäurealkylester und Wachse. Beispiele einzelner Verbindungen aus allgemein geeigneten Stoffgruppen sind in den Beispielen angegeben.

In dem erfindungsgemäßen Masterbatch bzw. der erfindungsgemäßen Zusammensetzung können noch weitere Komponenten enthalten sein, solange dies der Wirkung der erfindungsgemäßen Additivmischung nicht abträglich sind, beispielsweise Stabilisatoren, Fliesshilfsmittel, Anti-Caking-Agentien wie Kiselsäure, Z.B. Sipemat 22 S oder Aerosil R 972 (Degussa, DE) oder dergleichen.

Im Rahmen der Erfindung wurde überraschend gefunden, dass die Kombination aus mindestens einer oligomeren oder polymeren Siloxankomponente wir hierin beschrieben und mindestens einem nicht-anionischen Fettsäurederivat, das mindestens einen aliphatischen oder cyclischen Rest mit 6 bis 32 Kohlenstoffatomen aufweist, insbesondere eines nicht-anionischen Fettsäürederivats wie hier beschrieben, bei der Prä-Exfolierung eines Nanoclays synergistisch und besonders vorteilhaft zusammen wirken kann. So erfolgt durch die Modifikation eines Nanoclays durch die Siloxankomponente (A) alleine keine signifikante Schichtaufweitung und Präexfolierung. Bei der anschließenden Einarbeitung in die gewünschte Kunststoffmatrix, z.B. Polypropylen, erfolgt keine Exfolierung; in der Rontgendiffraktometrie ist der 001-Peak des organophilierten Nanoclays noch deutlich sichtbar und ein Schichtabstand bestimmbar. Gleiches ergibt sich auch bei der Modifikation des Nanoclays durch die nicht anionische Komponente (B) alleine. Zwar ist einen gewisse Schichtaufweitung in der Rontgendiffraktometrie nachweisbar, aber nach der anschließenden Einarbeitung in die Kunststoffmatrix ist in der Rontgendiffraktometrie der 001-Peak des organophilierten Nanoclays noch deutlich sichtbar und ein Schichtabstand bestimmbar. Es ist somit kein Exfolierung der Einzelschichten im Kunststoff erfolgt. Im Gegensatz dazu wird bei der Modifikation des Nanoclays mir der erfindungsgemäßen Kombination aus mindestens einer Siloxankomponente (A) wir vorstehend definiert und der mindestens einen nicht-anionischen organischen Komponente (B) wie hier beschrieben eine besonders vorteilhafte Präexfolierung erreicht und nach der anschließenden Einarbeitung in die Kunststoffmatrix eine praktisch vollständige Delaminierung bzw. Exfolierung erzielt; der 001-Peak des organophilierten Nanoclays ist praktisch nicht mehr sichtbar.
Es können erfindungsgemäß auch anionische organische Komponenten, die mindestens einen aliphatischen oder cyclischen Rest mit 6 bis 32 Kohlenstoffatomen aufweisen, verwendet werden, jedoch ist die Verwendung nicht-anionischer Komponenten aufgrund der besonders vorteilhaften Produkteigenschaften der erfindungsgemäßen Zusammensetzungen besonders bevorzugt.

Die insgesamt hier genannten Komponenten (A) und (B) dienen der überraschend guten Verbesserung der Exfolierung des Nanoclays, wobei die genannten Komponenten auch den besonderen Vorteil haben, daß sie die beste chemische Verträglichkeit zu den üblicherweise verwendeten Interkalierungsmitteln aufweisen und dennoch kostengünstig sind.

Ein besonderer Vorteil dieser Komponenten (A) und (B) ergibt sich in Kombination mit gemahlenem Nanoclay, da dieses als feinverteiltes Pulver einen feinen Staub bilden kann und so eine potentielle Gefahrenquelle für Explosionen darstellt. Mit dem Einsatz eines der genannten Additive oder einer beliebigen Mischung der genannten Additive kann dieses Problem deutlich reduziert oder aufgehoben werden.

Bevorzugt sind Fettsäurederivate, die abgeleitet sind aus Fettsäuren mit 10 bis 13 Kohlenstoffatomen. Hier sind insbesondere Laurinsäure, Palmitinsäure, Stearinsäure, Oleinsäure, Linolsäure, Capronsäure und Rizinusöl zu nennen. Die Fettsäurederivate, insbesondere die genannten Vertreter dieser Gruppe, haben den Vorteil, daß sie leicht in großen Mengen erhältlich und dabei kostengünstig sind und auf der anderen Seite einen sicheren Umgang im industriellen Großmaßstab erlauben. Die Fettsäurederivate umfassen hydrogenierte Derivate, Alkoholderivate, Aminderivate oder deren Mischungen..Sie können außerdem abgeleitet sein aus der Gruppe der polymeren Fettsäuren, der Ketofettsäuren, der Fettsäurealkyloxazoline und Fettsäurealkylbisoxazoline, oder deren Mischungen. Bei den ungesättigten Fettsäuren sind insbesondere die mono- oder polyungesättigten Hydroxyfettsäuren zu nennen.

Zusatzlich kann die erfindungsgemäße Zusammensetzung eine Komponente enthalten, ausgewählt aus der Gruppe der Ethylen-Propylen-Copolymere (EPM), der Ethylen-Propylen-Terpolymere (EPDM), der thermoplastischen Elastomere, der Haftvermittler, der Vernetzungsmittel oder deren Mischungen. Als ein zu verwendender Haftvermittler sind die funktionalisierten Silane zu nennen. EPM und/oder EPDM weisen bevorzugt ein mittleres Molekulargewicht von weniger als 20.000 auf. Das Verhältnis von Ethylen zu Propylen in EPM und/oder EPDM kann von 40 : 60 bis 60 : 40 betragen.

Es hat sich überraschend gezeigt, dass die besten Produkteigenschaften erzielt werden, wenn bei der Herstellung der erfindungsgemäßen Zusammensetzung/ der Masterbatch von einem trockenen, pulverförmigen Nanoclay ausgegangen wird, der dann in einem trockenen Verfahren mit dem pre-exfolierenden Additiv oder der Additivmischung modifiziert wird. Dabei wird der Nanoclay mit dem trockenem Additiv bzw. der Additivmischung gecoatet, wobei herkömmliche Trockenmischer, insbesondere solche mit hoher Drehgeschwindigkeit verwendet werden können. Trocken soll hier im Gegensatz zu einer nicht pulverigen bzw. pastösen (extrudierbaren) Masse, einer Slurry oder einer Suspension angesehen werden. Vorzugsweise ist die erfindungsgemäße Modifikation des Nanoclays somit eine Oberflächenmodifikation bzw. ein Oberflächencoating.

Der pulverförmige Masterbatch in Form der im wesentlichen homogenen Mischung des pre-exfolierten Nanoclays in einer seiner erfindungsgemäßen Ausgestaltungen kann mit einem Polymerpulver im wesentlichen homogen vermischt sein. Das Polymerpulver soll vor allen Dingen das Zusammenbacken des Pulver-Masterbatches verhindern, wenn dieser z. B. bei erhöhter Temperatur gelagert wird. Es trägt maßgeblich zur Verbesserung der Rieselfähigkeit des fertigen Pulver-Masterbatches bei. Ein geeignetes Auswahlkriterium für das jeweils zu verwendende Polymerpulver ist im wesentlichen die Kompatibilität mit dem weiteren Einsatzzweck des Pulver-Masterbatches. Beispielhaft Erwähnung finden sollen geeignete Polymerpulver, wie Polyethylen-Ethylenvinylacetat-Copolymere (EVA), Ethylenethylacrylat-Copolymere (EEA), Ethylenmethylacrylat-Copolymere (EMA), Ethylenbutylacrylat-Copolymere (EBA), deren mit Maleinsäureanhydrid (MAH) modifizierte Derivate, Ionomere, Styrol-Elastomer-Systeme, Ether-Ester-Blockcopolymere, Polyether-Polyamid-Block-Copolymere (PEBA), Mischungen von thermoplastischen Polymeren, thermoplastische Polyurethanelastomere, therinoplastischer Siliconkautschuk oder Mischungen der genannten Polymere. Als solche Mischungen sind z. B. EVA/SAN, EVA/PA11, EVA/PS, und auch PVDF/EVA zu nennen. Letzteres ist als ALCRYN von DuPont im Handel erhältlich.

Die erfindungsgemäße Aufgabe wird ebenfalls gelöst durch einen Polymer-Masterbatch der durch Compoundierung des pulverförmigen Masterbatches in einer seiner erfindungsgemäßen Ausgestaltungen zusammen mit einem vorherbestimmten Trägerpolymer erhalten worden ist.

Hierfür geeignete Trägerpolymere umfassen Polyethylen-Ethylenvinylacetat-Copolymere (EVA), Ethylenethylacrylat-Copolymere (EEA), Ethylenmethylacrylat-Copolymere (EMA), Ethylenbutylacrylat-Copolymere (EBA), deren mit Maleinsäureanhydrid (MAH) modifizierte Derivate, Ionomere, Styrol-Elastomer-Systeme, Ether-Ester-Blockcopolymere, Polyether-Polyamid-Block-Copolymere (PEBA), Mischungen von thermoplastischen Polymeren, thermoplastische Polyurethanelastomere, thermoplastischen Siliconkautschuk oder Mischungen der genannten Polymere. Als solche Mischungen sind z. B. EVA/SAN, EVA/PA11, EVA/PS, und auch PVDF/EVA zu nennen. Letzteres ist als ALCRYN von DuPont im Handel erhältlich.

Vorteilhaft und in Hinblick auf die technische Anwendung vereinfachend ist die Tatsache, daß sich als Polymerpulver zur Bildung der im wesentlichen homogenen Mischung mit dem Pulver-Masterbatch und als Trägerpolymer zur Bildung des Polymer-Masterbatches im wesentlichen die gleichen Ausgangsmaterialien eignen. Neben einem einfacheren technischen Handling werden dadurch auch Kompatibilitätsprobleme vermieden.

Der Anteil des Trägerpolymers in dem Polymer-Masterbach beträgt 10-90 Gew.%, vorzugsweise 40 - 70 Gew.%. Für die Anwendung des Polymer-Masterbaches hat es sich als vorteilhaft erwiesen, wenn dieser in Granulatform vorliegt.

Die erfindungsgemäßen Pulver-Masterbatche oder Polymer-Masterbatche, gegebenenfalls in einer der genannten Abwandlungen, können einer Vielzahl von Anwendungen als Nano-Füllstoff in Polymeren, Polymerzusammensetzungen oder allgemein Kunststoffen zugeführt werden. Dazu gehört auch, daß sie zusätzlich in bereits bekannten Füllstoffsystemen eingesetzt werden, um den Gehalt an bisher üblichem Füllstoff zu reduzieren und in der Regel das Eigenschaftsprofil der so hergestellten Polymere oder Polymerzusammensetzungen zu verbessern.

Ein wichtiges Gebiet ist in diesem Fall der Einsatz in halogenfreien Flammschutzmitteln. Als halogenfreie Füllstoffe kommen in den Flammschutzmitteln im wesentlichen Aluminiumhydroxid, Aluminiumoxihydrat (Böhmit), Magnesiumhydroxid, Magnesiumoxid, Brucit, Magnesiumcarbonat, Hydromagnesit, Huntit, Bauxit, Calciumcarbonat, Talk, Glaspulver, Melaminisocyanurate, deren Derivate und Zubereitungen, Borate, Stannate und Hydroxystannate, Phosphate oder beliebige Mischungen davon zum Einsatz. Um eine Kompatibilität zwischen dem eingesetzten halogenfreien Füllstoff und dem Polymer oder der Polymerzusammensetzung zu gewährleisten, in das diese Füllstoffe eingearbeitet werden sollen, um das halogenfreie Flammschutzmittel zu ergeben, war es bisher im Stand der Technik erforderlich, daß die halogenfreien Füllstoffe, hier sind insbesondere Aluminium- und Magnesiumhydroxide zu nennen, oberflächenmodifiziert wurden. Nur so konnte ein gewünschtes Maß an mechanischen und/oder elektrischen Eigenschaften ermöglicht werden. Werden nun die genannten halogenfreien Füllstoffe zusammen mit dem erfindungsgemäßen Masterbatch eingesetzt, hat sich überraschend und in vorteilhafter Weise gezeigt, daß die Notwendigkeit der bisher üblichen Oberflächenmodifizierung der halogenfreien Füllstoffe entfällt.

Zu den genannten halogenfreien Füllstoffen ist noch zu ergänzen, daß hier besonders Aluminiumhydroxid (als ATH bezeichnetes Aluminiumtrihydrat der allgemeinen Formel Al₂O₃ x 3H₂O) und Magnesiumhydroxid in ihren verschiedenen Formen eingesetzt werden, wobei für beide Gruppen nicht nur ihre Wirksamkeit in Flammschutzmitteln, sondern auch ihre besondere Wirksamkeit im Bereich der Verminderung der Rauchentwicklung und ihr Einsatz in halogenierten, insbesondere bromierten und chlorierten Polymeren, unter anderem auch in PVC, zu nennen ist. Durch den Einsatz in Kombination mit dem erfindungsgemäßen Pulver- oder Polymer-Masterbatch kann der Anteil an halogenfreiem Füllstoff vermindert werden, ohne das Eigenschaftsprofil negativ zu beeinflussen.

Bei den Magnesiumhydroxiden ist sowohl die synthetische Form als auch der natürlich vorkommende Brucit gleichermaßen einsetzbar. Diese Füllstoffe werden bevorzugt auf mittlere Teilchengrößen von 1-12 µm, vorzugsweise auf 2 - 8 µm gemahlen. Bei Anwendungen der Füllstoffe in Kombination mit dem erfindungsgemäßen Masterbatch, bei welchem die Verarbeitungstemperatur oberhalb von 180°C liegt oder die Gebrauchstemperatur der fertigen Polymere oder Kunststoffe für einen längeren Zeitpunkt oberhalb von 150°C liegt, werden besonders gute Ergebnisse erzielt, wenn die mittlere Teilchengröße der Füllstoffe bei 2 - 8 µm liegt.

Zu einer ganz besonders erstaunlichen Anwendung gelangt der erfindungsgemäße Masterbatch sowohl in seiner Form als Pulver-Masterbatch, wie auch als Polymermasterbatch als Füllstoff in Polyolefinen als solchen sowie deren Mischungen ("Legierungen", auch als "Alloys" bezeichnet), technischen Kunststoffen, wie Polyamid und Polyesthern sowie deren Mischungen, Polystyrolen, Duroplasten, wie ungesättigte Polyesther (UP)- und Epoxidharzsysteme.

Es hat sich gezeigt, daß die Pulver- oder Polymer-Masterbatche, als Füllstoffe in diesen Polyolefinsystemen eingesetzt, die ideale, d. h. exfolierte Verteilung und Dispersion in der Polymermatrix erreichen, was bisher bei den unpolaren Polymeren als unmöglich galt. Bisher gab es erhebliche Probleme, eine gleichmäßige Verteilung schon von sehr geringen Anteilen von z. B. 0,1 - 15 Gew.% von herkömmlich erhältlichen Nanoclays in einer solchen Polymermatrix zu erreichen, was zu einer erheblichen Verschlechterung der mechanischen Eigenschaften führte und außerdem zu einem unberechenbaren, schwankenden Verhalten in Brennbarkeitstest.

Alles zusammen genommen zeigte sich ein besonderer Vorteil der erfindungsgemäßen Pulver- wie Polymer-Masterbatche darin, daß sie als Kompatibilisatoren und ebenso als Krustenbildner und somit ebenso als wirksame Bestandteile von Flammschutzmitteln eingesetzt werden können. Die Polymerzusammensetzung kann zusätzlich Stabilisatoren , die dem Fachmann als solche geläufig sind, enthalten.

Ein weiteres breites Anwendungsfeld der Pulver- oder Polymer-Masterbatche ist in ihrem Einsatz als Füllstoff in Elastomeren und Duroplasten zu sehen.

Ganz allgemein lassen sich die Vorteile der Pulver- oder Polymer-Masterbatche bei ihrem Einsatz in den vielfältig genannten Polymersystemen so zusammenfassen, daß durch Einsatz der Pulver- oder Polymer-Masterbatche verbesserte Oberflächeneigenschaften der Polymerzusammensetzung, wie Oberflächenglätte oder Gleichmäßigkeit ein fehlendes fettiges Aussehen an der Oberfläche und ausgezeichnete Bedruck- und Kopierfähigkeit erreicht werden. Daneben ist die Abriebfestigkeit verbessert und die Durchlässigkeitseigenschaften sowie die Friktionseigenschaften werden günstig beeinflußt. Als besonders vorteilhaft für die industrielle Verwertung ist auch die fehlende Durchlässigkeit für verschiedene gasförmige Substanzen zu nennen. Durch eine erhöhte Plastizität und Formbarkeit kann die Verarbeitungsqualität z. B. im Spritzgußverfahren deutlich verbessert werden. Als weitere vorteilhafte Eigenschaften sind eine verringerte Schrumpfung, eine verbesserte Verarbeitbarkeit auf Extrudern allgemein und eine verminderte Trübung zu nennen. Bei der Blasformung konnte eine leichte Verarbeitbarkeit und insgesamt ein blasenstabilisierender Effekt beobachtet werden. In Brandtests, wie B1 und UL 94 konnte eine Verminderung der Tropfenbildung sogar bei sehr geringer Beladung mit dem Nanoclay-Füllstoff in Form des Pulver- oder Polymer-Masterbatches beobachtet werden.

Wenn eine den erfindungsgemäßen Pulver-Masterbatch in einer seiner Ausgestaltungen enthaltende Polymerzusammensetzung hergestellt werden soll, kann dies in einfacher Weise geschehen, wie beispielhaft in Hinblick auf eine flammgeschützte Polymerzusammensetzung erläutert.
Zunächst wird ein Nanoclay ausgewählt, pre-exfoliert und wahlweise bis zu einer gewünschten Teilchengröße fein vermahlen. Dadurch wird der pulverförmige Masterbatch erhalten, der zusätzlich noch mit einem Polymerpulver zu einer im wesentlichen homogenen Mischung verarbeitet werden kann. Um diesen mit dem flammhemmenden, vorzugsweise auch halogenfreien Füllstoff in das Polymer zur Bildung der flammgeschützten Polymerzusammensetzung einzubringen, sind zwei verschiedene Verfahrensweisen möglich. Zum einen kann der pulverförmige Masterbatch mit dem Füllstoff gemischt und anschließend mit dem Polymer zu der flammgeschützten Polymerzusammensetzung compoundiert werden. In einer zweiten Variante werden der pulverförmige Masterbatch und der Füllstoff voneinander getrennt zu dem Strom des geschmolzenen Polymers zudosiert, auf diese Weise dort eingebettet und so die flammgeschützte Polymerzusammensetzung gebildet.

Die Herstellung einer solchen flammgeschützten Polymerzusammensetzung ist ebenfalls auf der Basis eines Polymer-Masterbatches möglich. Dann wird das für die Polymerzusammensetzung gewünschte Polymer mit einem Polymer-Masterbatch gemäß einer seiner erfindungsgemäßen Ausgestaltungen in der Weise compoundiert, daß zunächst wieder das Nanoclay ausgewählt, pre-exfoliert und wahlweise bis zu einer gewünschten Teilchengröße fein vermahlen wird. Dadurch wird ein pulverförmiger Masterbatch erhalten, gegebenenfalls in homogener Mischung mit einem Polymerpulver. Der so erhaltene Pulver-Masterbatch wird mit einem Trägerpolymer, das auf das Polymerpulver abgestimmt ist oder dem verwendeten Polymerpulver entspricht, compoundiert, so daß auf diese Weise ein Polymer-Masterbatch gebildet und anschließend weiterverarbeitet wird zu der fertigen flammgeschützten Polymerzusammensetzung. Auch hier sind wieder zwei alternative Verfahrensweisen möglich. Bei der ersten Alternative wird der Polymer-Masterbatch mechanisch mit dem Polymer, in das er eingearbeitet werden soll, gemischt und anschließend mit dem flammhemmenden, vorzugsweise halogenfreien Füllstoff zu der fertigen flammgeschützten Polymerzusammensetzung compoundiert. Bei der zweiten Variante wird der Polymer-Masterbatch zusammen mit dem Polymer, das flammgeschützt werden soll, einem ersten Einlaß der Compoundiermaschine zugeführt und der flammhemmende Füllstoff wird zu einem späteren Zeitpunkt ("downstream") zu der aufgeschmolzenen Polymerzusammensetzung hinzugefügt oder im sogenannten "Slpit-feed"-Verfahrew zudosiert, um so die fertige flammgeschützte Polymerzusammensetzung zu bilden.

Das in bezug auf den Pulver-Masterbatch wie den Polymer-Masterbatch geschilderte Verfahren läßt sich nicht nur zur Herstellung flammgeschützter Polymerzusammensetzungen verwenden, sondern ist grundsätzlich auch für weitere vielfältige Anwendungen des Pulver-Masterbatches und des Polymer-Masterbatches, z.B. bei der Compoundierung von Polyolefinen, nutzbar. Die hervorragenden Ergebnisse bei der Compoundierung sind darauf zurückzuführen, daß durch den Pulver-Masterbatch, der auch Ausgangspunkt für den Polymer-Masterbatch ist, das eingesetzte Nanoclay bereits so behandelt ist, daß die Exfolierung der Schichten des eingesetzten Nanoclays vorbereitet und gefördert wird, bevor der eigentliche Compoundierschritt erfolgt. Dadurch wird die Compoundierung effektiver, und es werden weniger Energie- und weniger Zeitaufwand erforderlich, um den Nanoclay in dem gewünschten Polymer zu exfolieren. Daraus ergibt sich ein sehr wesentlicher Vorteil der Compoundierung unter Einsatz der vorbereiteten Masterbatche, weil dadurch die Verweilzeit des Polymers verringert wird, die Wärmevorgeschichte des Polymers auf einem Minimum gehalten und damit dem thermischen Abbau vorgebeugt und entgegengewirkt wird. Im Gegenzug wird die Farbkraft und werden die mechanischen Eigenschaften der fertigen Polymerzusammensetzung, bzw. des Compounds, deutlich verbessert, der Durchsatz erhöht und somit die Kosten der Compoundierung spürbar verringert. Als weiterer wesentlicher Vorteil des Einsatzes eines der erfindungsgemäßen Masterbatche ist zusätzlich zu nennen, daß die Gesamtbeladung des Polymers oder der Polymerzusammensetzung mit dem Nanoclay verringert werden kann. Vorzugsweise sogar auf einen Anteil von 2 Gew.-% und besonders bevorzugt auf einen Anteil unter 1 Gew.-%, ohne z.B. beim Einsatz für die Herstellung eines Flammschutzmittels die flammhemmenden Eigenschaften zu beeinträchtigen. Verglichen damit ist bei einem herkömmlichen Beladen der Polymerzusammensetzung mit dem Nanoclay eine Gesamtbeladung zwischen 5 und 10 Gew.-% erforderlich.

Diese deutlichen Verbesserungen bei der Compoundierung selbst sowie in bezug auf das Eigenschaftsprofil der compoundierten Polymere oder Polymerzusammensetzungen können dadurch erklärt werden, daß die Vorbereitung der Nanoclays in Form des Masterbatch, die der Förderung der Exfolierung bereits vor der Compoundierung dient, dazu beiträgt, daß das Nanoclay besser mit dem Polymer und den ggf. zusätzlich verwendeten halogenfreien Füllstoffen und/oder Polymeren vermischt werden kann, als während des eigentlichen Compoundierschritts.

Es hat sich gezeigt, daß z.B. bei einem Polymer oder einer Polymerzusammensetzung auf der Basis von Polypropylen mit einer Gesamtfüllstoffbeladung von 65 Gew.-% nach der Compoundierung eine Reißdehnung von mehr als 200 % (entsprechend 2m/m) und vorzugsweise von 500 % (entsprechend 5m/m) oder mehr nachgewiesen werden konnte, verglichen mit 10 % (entsprechend 0,1m/m) ohne Einsatz der erfindungsgemäßen Masterbatche.

Die oben genannten Verfahren zur Herstellung der flammgeschützten Polymerzusammensetzung werden ergänzt durch nachgeschaltete Verarbeitungsschritte, wie Extrudieren der erhaltenen Polymerzusammensetzung, um dadurch Kabel oder Leitungen herzustellen. Es kann sich auch ein Spritzgußverfahren der Polymerzusammensetzung anschließen, ein Blasspritzen von Filmen, ein Rotationsschmelzen- oder gießen, um nur einige Verarbeitungsmöglichkeiten der erhaltenen Polymerzusammensetzung zu einem fertigen Produkt zu nennen.

Die unter Verwendung von Polymeren oder pulverförmigen Masterbatchen erhaltenen Polymere oder Polymerzusammensetzungen können in vorteilhafter Weise im Flammschutzbereich als Synergisten zur Krustenbildung und als Kompatibilisatoren, aber auch allgemein als Mittel zu vielfältiger Eigenschaftsverbesserung in Polymerzusammensetzungen und als sperrschichtbildende Mittel eingesetzt werden. Zu solchen Polymerzusammensetzungen, deren Eigenschaften spürbar verbessert werden können, zählen auch Elastomere und Duroplaste.

Im folgenden soll die Erfindung anhand von ausgewählten Beispielen näher erläutert werden.

### Beispiele

Die in den Beispielen und den Vergleichsbeispielen erhaltenen Polymerzusammensetzungen wurden den nachfolgend genannten Standarttests und - Messungen unterworfen:
Schmelzindex (MFI) nach DIN 53 735,
Zugfestigkeit nach DIN 53 455,
Reißdehnung nach DIN 53 455,
Schlagfestigkeitsprüfung (aₙ) nach DIN 53 453,
Brennverhalten nach dem UL-94 Test, Underwriter Laboratories Standard.
UTBD (untamped bulk density) bezeichnet das Schüttgewicht, unverdichtet, in kg/l.
Als Schnellmischer wurde jeweils ein Fabrikat der Fa. M.T.I., Typ 60/2500 eingesetzt.

### I. Herstellung eines Pulver-Masterbatch

### Vergleichsbeispiel 1:

In einem handelsüblichen Schnellmischer, der explosionsgeschützt sein muß, werden

| | |
|---|---|
| 100 kg | eines Nanoclays "Nanofil 15" der Firma Südchemie AG, Deutschland, bei 1360 UPM (Umdrehungen pro Minute) auf eine Temperatur von ca. 45°C aufgeheizt und bei dieser Temperatur |
| 34 kg | Fettsäureester (Glycerylstearat der Fa. KeBo, DE), als Additiv über eine Zeitspanne von ca. 30 s zudosiert. Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt. |
| 40 kg | eines EVA-Pulvers werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes, nahezu staubfreies Pulver mit sehr guter Dosierbarkeit und weist eine UTBD von 0,65 kg/l auf. Aufgrund der sehr guten Dosierbarkeit ist dieser Pulver-Masterbatch für kontinuierliche Compoundieraggregate sehr geeignet. Eine erfindungsgemäße Zusammensetzung analog zu diesem und den nachfolgenden Beispielen kann auch durch Weglassen des EVA-Bestandteils entsprechend hergestellt werden. EVA kann auch durch andere Polymere, wie Polyolefinpulver ersetzt werden.

### Beispiel 2:

In einem handelsüblichen Schnellmischer, der explosionsgeschützt sein muß, werden

| | |
|---|---|
| 100 kg | eines Nanoclays "Nanofil 15" der Firma Südchemie AG, Deutschland bei 1360 UPM (Umdrehungen pro Minute) auf eine Temperatur von ca. 45 ° C aufgeheizt und bei dieser Temperatur |
| 24 kg | Fettsäureamin (Genamin SH 100, Fa. Clariant, DE) und |
| 4,4 kg | Polydiethylsiloxan "Lithsolvent PL", von der Fa. KeBo, Düsseldorf, Deutschland, in der angegebenen Reihenfolge als Additiv zudosiert. |
| | Bei der angegebenen Drehzahl wird der Reaktionsansatz bis zur Austragstemperatur von 90°C aufgeheizt und anschließend in einem Kühlmischer auf eine Endtemperatur von etwa 30°C abgekühlt. |
| 20 kg | eines EVA-Pulver werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes, nahezu staubfreies Pulver mit sehr guter Dosierbarkeit und weist eine UTBD von 0,82 kg/l auf. Aufgrund der sehr guten Dosierbarkeit ist dieser Pulver-Masterbatch für kontinuierliche Compoundieraggregate sehr geeignet.

### Beispiel 2a:

In einem handelsüblichen Schnellmischer, der explosionsgeschützt sein muß, werden

| | |
|---|---|
| 100 kg | eines Nanoclays "Nanofil 5" der Firma Südchemie AG, Deutschland, bei 1360 UPM (Umdrehungen pro Minute) auf eine Temperatur von ca. 45°C aufgeheizt und bei dieser Temperatur |
| 24 kg | Rapsölmethylester (Kebonal 20, Fa. KeBo) und |
| 4,4 kg | Polydiethylsiloxan "Lithsolvent PL", von der Fa. KeBo, Düsseldorf, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 90°C aufgeheizt und anschließend in ei- |
| | nem Kühlmischer auf eine Endtemperatur von etwa 30°C abgekühlt. |

Der so erhaltene Pulver-Masterbatch ist ein freifließendes nahezu staubfreies Pulver mit sehr guter Dosierbarkeit und weist eine UTBD von 0,69 kg/l auf. Aufgrund der sehr guten Dosierbarkeit ist dieser Pulver-Masterbatch für kontinuierliche Compoundieraggregate sehr geeignet.

### Beispiel 3:

In einem handelsüblichen Schnellmischer, der explosionsgeschützt sein muß, werden

| | |
|---|---|
| 100 kg | eines Nanoclays "Nanofil 5" der Firma Südchemie AG, Deutschland bei 1360 UPM (Umdrehungen pro Minute) auf eine Temperatur von ca. 45°C aufgeheizt und bei dieser Temperatur |
| 4,4 kg | Polyphenylmethylsiloxan der Fa. ABCR Research Chemical, Karlsruhe, DE und |
| 24,4 kg | Stearinsäureester (Glycerylstearat der Fa. KeBo, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 130°C aufgeheizt und anschließend in einem Kühlmischer auf eine Endtemperatur von etwa 30°C abgekühlt. |

Der so erhaltene Pulver-Masterbatch ist ein freifließendes, nahezu staubfreies Pulver mit sehr guter Dosierbarkeit und weist eine UTBD von 0,65 kg/l auf Auf grund der sehr guten Dosierbarkeit ist dieser Pulver-Masterbatch für kontinuierliche Compoundieraggregate sehr geeignet.

### Beispiel 4:

In einem handelsüblichen Schnellmischer, der explosionsgeschützt sein muß, werden

| | |
|---|---|
| 100 kg | eines Nanoclays "Nanofil 948" der Firma Südchemie AG, Deutschland, bei 1360 UPM (Umdrehungen pro Minute) auf eine Temperatur von ca. 45°C aufgeheizt und bei dieser Temperatur |
| 24,4 kg | Rapsölmethylester (Kebonal 20, Fa. KeBo) und |
| 4,4 kg | Polydiethylpolysiloxan "Lithsovent PL", von der Fa. KeBo, Düsseldorf, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 110°C aufgeheizt und anschließend in einem Kühlmischer auf eine Endtemperatur von etwa 30°C abgekühlt. |
| 80 kg | eines EVA-Pulvers werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes, nahezu staubfreies Pulver mit sehr guter Dosierbarkeit und weist eine UTBD von 0,73 kg/l auf. Aufgrund der sehr guten Dosierbarkeit ist dieser Pulver-Masterbatch für kontinuierliche Compoundieraggregate sehr geeignet.

### Beispiel 5:

In einem handelsüblichen Schnellmischer, der explosionsgeschützt sein muß, werden

| | |
|---|---|
| 100 kg | eines Nanoclays "Nanofil 5" der Firma Südchemie AG, Deutschland, bei 1360 UPM (Umdrehungen pro Minute) auf eine Temperatur von ca. 45°C aufgeheizt und bei dieser Temperatur |
| 24,4 kg | Rizinusölethylester (Kebonal 60A, Fa. KeBo) und |
| 4,4 kg | Polyphenylmethylsiloxan der Fa. ABCR Research Chemical, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 85°C aufgeheizt und anschließend in einem Kühlmischer auf eine Endtemperatur von etwa 30°C abgekühlt. |
| 40 kg | eines EVA-Pulvers werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes, nahezu staubfreies Pulver mit sehr guter Dosierbarkeit und weist eine UTBD von 0,67 kg/l auf. Aufgrund der sehr guten Dosierbarkeit ist dieser Pulver-Masterbatch für kontinuierliche Compoundieraggregate sehr geeignet.

### Beispiel 6:

In einem handelsüblichen Schnellmischer, der explosionsgeschützt sein muß, werden

| | |
|---|---|
| 100 kg | eines Nanoclays "Elementis EA 108" der Firma Elementis USA bei 1360 UPM (Umdrehungen pro Minute) auf eine Temperatur von ca. 45°C aufgeheizt und bei dieser Temperatur |
| 24,4 kg | Rapsölmethylester (Kebonal 20, Fa. KeBo) und |
| 4,4 kg | Polydiethylpolysiloxan "Lithsolvent PL", von der Fa. KeBo, Düsseldorf, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt. |
| 80 kg | eines EVA-Pulvers werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes, nahezu staubfreies Pulver mit sehr guter Dosierbarkeit und weist eine UTBD von 0,81 kg/l auf. Aufgrund der sehr guten Dosierbarkeit ist dieser Pulver-Masterbatch für kontinuierliche Compoundieraggregate sehr geeignet.

### Beispiel 7:

In einem handelsüblichen Schnellmischer, der explosionsgeschützt sein muß, werden

| | |
|---|---|
| 100 kg | eines Nanoclays "SCP 30 B" der Firma Southern Clay Products, Gonzales, Texas, USA, bei 1360 UPM (Umdrehungen pro Minute) auf eine Temperatur von ca. 45°C aufgeheizt und bei dieser Temperatur |
| 24,4 kg | Rapsölmethylester (Kebonal 20, Fa. KeBo) und |
| 4,4 kg | Polydiethylpolysiloxan "Lithsolvent PL", von der Fa. KeBo, Düsseldorf, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt. |
| 80 kg | eines EVA-Pulvers werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes nahezu staubfreies Pulver mit sehr guter Dosierbarkeit und weist eine UTBD von 0,61 kg/l auf. Aufgrund der sehr guten Dosierbarkeit ist dieser Pulver-Masterbatch für kontinuierliche Compoundieraggregate sehr geeignet.

### Beispiel 8:

In einem handelsüblichen Schnellmischer, der explosionsgeschützt sein muß, werden

| | |
|---|---|
| 100 kg | eines Nanoclays "Nanofil 5" der Firma Südchemie AG, Deutschland, bei 1360 UPM (Umdrehungen pro Minute) auf eine Temperatur von ca. 60°C aufgeheizt und bei dieser Temperatur |
| 24,4 kg | Isostearyltitanat "Lithsolvent OF" und |
| 4,4 kg | Polydiethylpolysiloxan "Lithsolvent PL", beides von der Fa: KeBo, Düsseldorf, Deutschland, in der angegebenen Reihenfolge als Additiv über eine Zeitspanne von ca. 30 s zudosiert. |
| | Bei der angegebenen Drehzahl wird der Reaktionsansatz bis zur Austragstemperatur von 65°C aufgeheizt und anschließend in einem Kühlmischer auf eine Endtemperatur von etwa 30°C abgekühlt. |

Der so erhaltene Pulver-Masterbatch ist ein freifließendes, nahezu staubfreies Pulver mit sehr guter Dosierbarkeit und weist eine UTBD von 0,56 kg/l auf. Aufgrund der sehr guten Dosierbarkeit ist dieser Pulver-Masterbatch für kontinuierliche Compoundieraggregate sehr geeignet.

### Beispiel 14:

In einem handelsüblichen Schnellmischer der explosionsgeschützt sein muß, werden

| | |
|---|---|
| 100 kg | eines Nanoclays "Nanofil 32" der Firma Südchemie AG, Deutschland, bei 1360 UPM (Umdrehungen pro Minute) auf eine Temperatur von ca. 45°C aufgeheizt und bei dieser Temperatur |
| 24,4 kg | Isostearyltetratitanat "Lithsolvent OF" und |
| 4,4 kg | Polydiethylsiloxan "Lithsolvent PL", beides von der Fa. KeBo, Düsseldorf, Deutschland, als Additiv in der angegebenen Reihenfolge über eine Zeitspanne von ca. 30 s zudosiert. |
| | Bei der angegebenen Drehzahl wird der Reaktionsansatz bis zur Austragstemperatur von 100°C aufgeheizt und anschließend in einem Kühlmischer auf eine Endtemperatur von etwa 30°C abgekühlt. |
| 40 kg | eines EVA-Pulvers werden mit dem oben erhaltenen Reaktionsansatz homogen vermengt, um das Zusammenbacken z. B. bei Lagerung bei höherer Temperatur zu verhindern und in Sperrschichtsäcke abgepackt. |

Der so erhaltene Pulver-Masterbatch ist ein freifließendes, nahezu staubfreies Pulver mit sehr guter Dosierbarkeit und weist eine UTBD von 0,86 kg/l auf Aufgrund der sehr guten Dosierbarkeit ist dieser Pulver-Masterbatch für kontinuierliche Compoundieraggregate sehr geeignet.

### II. Herstellung eines Polymer-Masterbatch

Zur Herstellung eines Polymer-Masterbatches kann prinzipiell jede in der Compoundierindustrie zur Herstellung von hochgefüllten Systemen verwendete Verarbeitungsmaschine, z.B. ein Doppelwalzwerk, Innenmischer, FCM, Einschneckenextruder, Doppelschneckenextruder, Buss Ko-Kneter oder eine vergleichbare Verarbeitungsmaschine, eingesetzt werden. Bei dem Einsatz eines Buss Ko-Kneters sollte dieser mindestens 11 L/D Verfahrenslänge aufweisen.

### Beispiel 15:

Der aus Beispiel 2 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles EVA eingesetzt, wie es unter der Bezeichnung "Escorene Ultra UL 00119" von Exxon-Mobil im Handel erhältlich ist.

Der Buss Ko-Kneter wird in seiner Zone 1 und 2 sowie in der Granulierschnecke (GS) auf ca. 135°C und die Düse auf ca. 145°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z.B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.

Der Polymer-Masterbatch wird in Form von zylindrischem oder linsenförmigem Granulat erhalten.

### Beispiel 16:

Der Polymer-Masterbatch gemäß Beispiel 16 wird erhalten, wie in Beispiel 15 angegeben, wobei anstelle des Pulver-Masterbatches nach Beispiel 2 hier der nach Beispiel 2a erhaltene Pulver-Masterbatch eingesetzt wird.

### Beispiel 17:

Der Polymer-Masterbatch gemäß Beispiel 17 wird erhalten, wie in Beispiel 15 angegeben, wobei anstelle des Pulver-Masterbatches nach Beispiel 2 hier der nach Beispiel 3 erhaltene Pulver-Masterbatch eingesetzt wird.

### Beispiel 18:

Der Polymer-Masterbatch gemäß Beispiel 18 wird erhalten, wie in Beispiel 15 angegeben, wobei anstelle des Pulver-Masterbatches nach Beispiel 2 hier der nach Beispiel 8 erhaltene Pulver-Masterbatch eingesetzt wird.

### Beispiel 19:

Der aus Beispiel 2 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles ein EP-g-MAH eingesetzt, wie es unter der Bezeichnung "FUSABOND" von DuPont, USA, im Handel erhältlich ist.

Der Buss Ko-Kneter wird in seiner Zone 1 und 2 sowie in der GS auf ca. 165°C und die Düse auf ca. 170°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 20:

Der aus Beispiel 2 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles ein PP-g-MAH eingesetzt, wie es unter der Bezeichnung "EXXELOR PO 1050" von Exxon-Mobil im Handel erhältlich ist.

Der Buss Ko-Kneter wird in seiner Zone 1 und 2 sowie in der GS auf ca. 165°C und die Düse auf ca. 175°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 21:

Der aus Beispiel 8 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 2 erhaltenen Pulver-Masterbatches und 40 Gew.-% des Trägerpolymers eingesetzt. Als Trägerpolymer wird für die Zwecke dieses Ausführungsbeispieles EEA eingesetzt, wie es unter der Bezeichnung "Escor 5000" von Exxon-Mobil im Handel erhältlich ist.

Der Buss Ko-Kneter wird in seiner Zone 1 und 2 sowie in der GS auf ca. 125°C und die Düse auf ca. 135°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.

Der Polymer-Masterbatch wird in Form von zylindrischem oder linsenförmigem Granulat erhalten.

### Beispiel 22:

Der aus Beispiel 3 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles ein Calcium-Ionomer eingesetzt, wie es unter der Bezeichnung "ACLYN AC 201 A" von Allied Signal, USA, im Handel erhältlich ist.

Der Buss Ko-Kneter wird in seiner Zone 1 und 2 sowie in der GS auf ca. 125°C und die Düse auf ca. 135°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 23:

Der aus Beispiel 8 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles ein EAAZ Polymer eingesetzt, wie es unter der Bezeichnung "Iotek 7010" von Exxon-Mobile, USA, im Handel erhältlich ist.

Der Buss Ko-Kneter wird in seiner Zone 1 und 2 sowie in der GS auf ca. 110°C und die Düse auf ca. 125°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 24:

Der aus Beispiel 3 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles ein mit Maleinsäureanhydrid (MAH) modifiziertes Polypropylen eingesetzt, wie es unter der Bezeichnung "EXXELOR PO 1015" von Exxon-Mobil, USA, im Handel erhältlich ist, und das mit 10 Gew.-% Escorene Ultra 00328, ebenfalls von Exxon-Mobil, verschnitten worden ist.

Der Buss Ko-Kneter wird in seiner Zone 1 und 2 sowie in der GS auf ca. 185°C und die Düse auf ca. 200°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### Beispiel 25:

Der aus Beispiel 5 erhaltene Pulver-Masterbatch und das im Hinblick auf das gewünschte fertige Polymer oder die Polymerzusammensetzung ausgewählte Trägerpolymer werden einem Buss Ko-Kneter oder einer vergleichbaren geeigneten Verarbeitungsmaschine zugeführt.

Im Ausführungsbeispiel werden 60 Gew.-% des gemäß Beispiel 3 erhaltenen Pulver-Masterbatches und 40 Gew.-% des Trägerpolymers eingesetzt. Als Trägerpolymer wird für die Zwecke dieses Ausführungsbeispieles Polycaprolactam eingesetzt, wie es unter der Bezeichnung "Grilamid 20 LM" von EMS-Chemie, Schweiz, im Handel erhältlich ist.

Der Buss Ko-Kneter wird in seiner Zone 1 und 2 sowie in der GS auf ca. 200°C und die Düse auf ca. 220°C aufgeheizt und das Trägerpolymer in den Haupteinzug des Buss Ko-Kneters kontinuierlich dosiert. Die entsprechende Menge des ausgewählten Pulver-Masterbatches wird nach dem oben angegebenen Gewichtsverhältnis, z. B. mittels einer gravimetrischen Dosierwaage, in den Haupteinzug des Buss Ko-Kneters zugegeben. Im Verfahrensteil wird der Pulver-Masterbatch mit dem Trägerpolymer vermischt und der entstandene Polymer-Masterbatch anschließend zu einem Granulat verarbeitet, abgekühlt und abgefüllt.
Der Polymer-Masterbatch wird in Form von zylindrischem oder linsenförmigem Granulat erhalten.

### III. Pulver- und Polymer-Masterbatch in ausgewählten Polymerzusammensetzungen

Alle prozentualen Angaben in den nachfolgenden Tabellen beziehen sich auf Gewichtsprozent, soweit nichts anderes angegeben.

In den Tabellen werden folgende Abkürzungen verwendet:
ATH = Aluminiumtrihydrat der allgemeinen Formel Al₂O₃ x 3 H₂O
PU-MB = Pulver-Masterbatch
PO-MB = Polymer-Masterbatch

**Tabelle 1:**

| | | | |
|---|---|---|---|
| Beispiel | P1 | P2 | P3 |
| | [%] | [%] | [%] |
| Escorene Ultra 00119 | 40 | 40 | 40 |
| ATH 4 m²/g | 54 | 54 | 54 |
| PU-MB von Bsp. 3 | 6 | | |
| PU-MB von Bsp. 6 | | 6 | |
| PU-MB von Bsp. 7 | | | 6 |
| Schmelzindex g/10 Min | 8 | 6 | 3 |
| 190/10 | | | |
| Zugfestigkeit N/mm² | 11 | 10 | 10 |
| Reißdehnung m/m | 6,8 | 4,8 | 2,3 |

Die nach Tabelle 1 erhaltenen Ergebnisse zeigen im Vergleich zu den in dem Vergleichsbeispiel nach Tabelle 3 erhaltenen Werten, daß bei Einsatz des erfindungsgemäßen Pulver-Masterbatches bei gleichbleibenden und z. T. sogar noch verbesserten Zugfestigkeiten eine wesentlich verbesserte Reißdehnung erhalten wurde, bei zumindest gleichbleibend guten Brandschutzeigenschaften.

**Tabelle 2:**

| Beispiel | P5 | P6 | P7 | P8 |
|---|---|---|---|---|
| | [%] | [%] | [%] | [%] |
| Escorene Ultra 00119 | 36 | 36 | 36 | 36 |
| ATH 4m²/g | 54 | 54 | 54 | 54 |
| PO-MB von Bsp. 23 | 10 | | | |
| PO-MB von Bsp. 17 | | 10 | | |
| PO-MB von Bsp. 19 | | | 10 | |
| PO-MB von Bsp. 18 | | | | 10 |
| | | | | |
| Schmelzindex g/10 Min | 5 | 8,5 | 4 | 6 |
| 190/10 | | | | |
| Zugfestigkeit N/mm² | 8 | 11,8 | 10,5 | 9,4 |
| Reißdehnung m/m | 6,1 | 5,9 | 4,2 | 7 |

In Tabelle 2 sind unter Einsatz von erfindungsgemäßen Polymer-Masterbatchen erhaltene Ergebnisse angegeben. Dabei zeigen sich im Vergleich zu den in Tabelle 1 bei Einsatz von Pulver-Masterbatchen erhaltenen Reißdehnungen mit einer Ausnahme noch einmal verbesserte Werte.
Im Hinblick auf den Vergleich zu den nach Tabelle 3 erhaltenen Werten gilt prinzipiell dasselbe, wie zu Tabelle 1 bereits ausgeführt.

**Tabelle 3:**

| Vergleichsbeispiel | V1 | V2 | V3 | V4 |
|---|---|---|---|---|
| | [%] | [%] | [%] | [%] |
| Escorene Ultra 00119 | 40 | 40 | 40 | 40 |
| ATH 4m²/g | 60 | | 54 | 54 |
| Mg(OH)₂-FR 20 | | 60 | | |
| Nanofil 15 | | | 6 | |
| Nanofil 5 | | | | 6 |
| | | | | |
| Schmelzindex g/10 Min | 1 | 1 | 1,5 | 0,75 |
| 190/10 | | | | |
| Zugfestigkeit N/mm² | 9,7 | 10,8 | 10 | 9.3 |
| Reißdehnung m/m | 1,4 | 1,2 | 1,5 | 4 |

Bei dem hier verwendeten Magnesiumhydroxid stellt FR 20 die Typenbezeichnung des Herstellers, der Fa. Dead Sea Bromine, Israel, dar.
Die im Vergleichsbeispiel erhaltenen Werte für den Schmelzindex und die Reißdehnung bewegen sich in bezug auf die Verarbeitbarkeit bereits im Grenzbereich.
Für die Reißdehnung befinden sich die gemäß V1, V2 und V4 erhaltenen Werte unterhalb einer Norm, die bei 1,5 liegt.

**Tabelle 4:**

| Beispiel | P9 | P10 | P11 | P12 |
|---|---|---|---|---|
| | [%] | [%] | [%] | [%] |
| PP-Eltex KL 104 | 30 | 30 | 30 | 30 |
| Mg(OH)₂ FR 20 | 60 | 60 | 60 | 60 |
| PO-MB von Bsp. 16 | 10 | | | |
| PO-MB von Bsp. 18 | | 10 | | |
| PO-MB von Bsp. 19 | | | 10 | |
| PO-MB von Bsp. 23 | | | | 10 |
| | | | | |
| Schmelzindex g/10 Min | 6,2 | 8,0 | 7 | 10 |
| 230/5 | | | | |
| Zugfestigkeit N/mm² | 13,4 | 16 | 15,0 | 12,1 |
| Reißdehnung m/m | 2,1 | 1,9 | 2,0 | 2,9 |
| Schlagfestigkeit | 55 | o. Br. (60) | o. Br. (60) | o. Br. (45) |

Die in bezug auf die Schlagfestigkeit in Klammern angegebenen Werte bedeuten die Schlagarbeit, welche jeweils dann bestimmt werden konnte, wenn das Material keinen Bruch (o. Br.) zeigte.
Lediglich für Beispiel P9 wurde Materialbruch festgestellt. Allerdings wurde dennoch ein guter Wert für die Schlagfestigkeit erzielt, der weit über den Werten der Vergleichsbeipiele gemäß Tabelle 5 liegt und noch eine gute Verarbeitbarkeit, auch im Gehäusebau, gewährleistet.

**Tabelle 5:**

| Vergleichsbeispiel | V5 | V6 | V7 | V8 |
|---|---|---|---|---|
| | [%] | [%] | [%] | [%] |
| PP-Eltex KL 104 | 35 | 35 | 35 | 35 |
| Mg(OH)₂FR 20 | 65 | 59 | 59 | 59 |
| Nanofil 948 | | 6 | | |
| Elementis EA 108 | | | 6 | |
| Cloisite 30 B | | | | 6 |
| | | | | |
| Schmelzindex g/10 Min | 0,1 | 1,0 | 1,0 | 1,0 |
| 230/5 | | | | |
| Zugfestigkeit N/mm² | 15 | 13 | 14 | 13,5 |
| Reißdehnung m/m | 0,01 | 0,09 | 0,1 | 0,08 |
| Schlagfestigkeit | 8 | 10 | 12 | 9 |

Die bei diesen Vergleichsbeispielen erzielte Schlagfestigkeit liegt weit unterhalb der z. B. im Gehäusebau erforderlichen Werte. Eine Schlagfestigkeit von 8, wie sie für Vergleichbeispiel V5 ermittelt wurde, bedeutet ein sehr sprödes, hartes Material und ist für den Gehäusebau ungeeignet. Hier sind Schlagfestigkeiten von zumindest 30 erforderlich.
Da alle Materialien gemäß der Vergleichsbeispiele V5 bis V8 Materialbruch zeigten, waren hier auch keine Schlagarbeit anzugeben.

**Tabelle 6:**

| Beispiel | P13 | P14 | P15 | P16 |
|---|---|---|---|---|
| | [%] | [%] | [%] | [%] |
| PA6 - Ultramid B3L | 45 | 45 | 45 | 45 |
| Mg(OH)₂FR 20 | 45 | 45 | 45 | 45 |
| PO-MB von Bsp. 22 | 10 | | | |
| PO-MB von Bsp. 24 | | 10 | | |
| PO-MB von Bsp. 25 | | | 10 | |
| PO-MB von Bsp. 20 | | | | 10 |
| Schmelzindex g/10 Min | | | | |
| 275/10 | | | | |
| Zugfestigkeit N/mm² | 39 | 46 | 43 | 49 |
| Reißdehnung m/m | 0,02 | 0,09 | 0,05 | 0,07 |
| Schlagfestigkeit | 20 | 28 | 18 | 35 |

Bei technischen Polyamiden, wie hier mit PA6-Ultramid B3L verwendet, ist als problematische Eigenschaft die Reißdehnung zu nennen. Sie liegt bei den technischen Polyamiden normalerweise nicht über 0,02, wie die Tabelle 7 mit den Vergleichsversuchen V9 - V12 anschaulich zeigt. Lediglich V10 zeigt einen um eine Größenordnung besseren Wert, weil dort zusätzlich AMEO eingesetzt worden ist. Die üblicherweise schlechten Werte in bezug auf die Reißdehnung äußern sich bei den herkömmlichen technischen Polyamiden in Sprödbruch.

**Tabelle 7:**

| Vergleichsbeispiel | V9 | V10 | V11 | V12 |
|---|---|---|---|---|
| | [%] | [%] | [%] | [%] |
| PA6 - Ultramid B3L | 45 | 45 | 45 | 45 |
| Mg(OH)₂FR 20 | 55 | | 49 | 49 |
| FR 20 (+1 % AMEO) | | 55 | | |
| Cloisite 25 A | | | 6 | |
| Cloisite 30 B | | | | 6 |
| | | | | |
| Schmelzindex g/10 Min | | | | |
| 275/10 | | | | |
| Zugfestigkeit N/mm² | 50 | 60 | 35 | 40 |
| Reißdehnung m/m | 0,02 | 0,03 | 0,01 | 0,01 |
| Schlagfestigkeit | 20 | 32 | 13 | 12 |

Wie aus den Bemerkungen zu Tabelle 6 bereits hervorgeht, ist für das Eigenschaftsprofil dieser technischen Polyamide, wie hier für die Polymerzusammensetzung verwendet, die Reißdehnung von herausragender Bedeutung. Dabei zeigt sich, daß mit Ausnahme von P13 jede der erfindungsgemäß hergestellten Polymerzusammensetzungen eine Reißdehnung aufweist, die um zumindest drei Größenordnungen über den herkömmlich im Stand der Technik überhaupt erzielten Werten für die Reißdehnung liegt.

**Tabelle 8 mit polarem (Null-) Polymer:**

| Beispiel/ | V13 | V17 | P18 | P19 | P20 | V14 | V21 | P22 |
|---|---|---|---|---|---|---|---|---|
| Vergleichsbsp. | [%] | [%] | [%] | [%] | [%] | [%] | [%] | [%] |
| PE-EVA 00119 | 100 | 95 | 80 | 80 | 95 | 80 | 90 | 90 |
| Nanofil 5 | | 5 | | | | 20 | | |
| PU-MB 2 | | | 20 | | | | | |
| PU MB 2a | | | | 20 | | | | |
| PU-MB 6 | | | | | 5 | | | |
| PU-MB 1 | | | | | | | 10 | |
| PU-MB 5 | | | | | | | | 10 |
| | | | | | | | | |
| Schmelzindex g/10 Min | 6 | 12 | 14 | 16 | 15 | 6 | 12 | 16 |
| 190/10 | | | | | | | | |
| Zugfestigkeit N/mm² | 26 | 22 | 19 | 28 | 17 | 13 . | 21 | 24 |
| Reißdehnung m/m | 17 | 14 | 13 | 18 | 12 | 8,5 | 12 | 17 |
| Pickeltest Note visuell | 1 | 5 | 1 | 1 | 1 | 6 | 4 | 1 |

Zur visuellen Beurteilung der Produkte wurden die hergestellten Polymerzusammensetzungen (Granulate) zwischen heißen Platten zu einem dünnen Film (Pressplatte) verpresst und gegen einen schwarzen Hintergrund die Anwesenheit von hellen "Pickeln", d.h. nicht-homogen verteiltem Nanoclay beurteilt:
Note 1: keinerlei sichtbare Pickel bei 10x Vergrößerung
Note 6: extrem viele Pickel mit bloßem Auge zu erkennen

Die erfindungsgemäß mit polarem (Null-) Polymer hergestellten Polymerzusammensetzungen, die bis jetzt im Stand der Technik als nicht realisierbar galten, zeigen ein hervorragendes Eigenschaftsprofil. Als besonders vorteilhaft hat sich gezeigt, daß bei der Extrusion keine Bärte entstehen und daß sich das Material überhaupt sehr gut extrudieren läßt. Beim Formgießen wird die Schwindung geringer und die Oberfläche deutlich besser.

Außerdem sind die Versuche so angelegt, daß sie ein in der Fachwelt verbreitetes Vorurteil widerlegen, nach welchem sich das Eigenschaftsprofil der Polymerzusammensetzungen bzw. der Polymercompounds linear mit höherem Anteil an Füllstoff verbessern läßt.

Wie Tabelle 8 zeigt, weist das Versuchspaar P21 - P22 das ausgewogenste Eigenschaftsprofil auf, mit hohen Meßwerten oder ausgewogenen Mittenwerten in bezug auf die untersuchten Eigenschaften.

**Tabelle 9 mit unpolarem (Null-) Polymer:**

| | | | | | | | |
|---|---|---|---|---|---|---|---|
| Beispiel/ | V15 | V16 | V23 | P24 | V25 | P26 | P27 |
| Vergleichsbsp. | [%] | [%] | [%] | [%] | [%] | [%] | [%] |
| Riblene FL 30 | 100 | 80 | 80 | 80 | 95 | 90 | 90 |
| Nanofil 5 | | 20 | | | | | |
| PU-MB von Bsp. 1 | | | 20 | | 5 | | |
| PU-MB von Bsp. 3 | | | | 20 | | | |
| PO-MB von Bsp. 17 | | | | | | 10 | |
| PO-MB von Bsp. 21 | | | | | | | 10 |
| | | | | | | | |
| Schmelzindex g/10 Min | 4 | 20 | 42 | 47 | 39 | 46 | 39 |
| 190/10 | | | | | | | |
| Zugfestigkeit N/mm² | 13,5 | 10 | 11 | 12 | 12,5 | 13,0 | 12,6 |
| Reißfestigkeit N/mm² | | | | | | | |
| Reißdehnung m/m | 9,0 | 0,2 | 1,4 | 1,3 | 5,8 | 3,4 | 2,8 |
| Pickeltest Note visuell | 1 | 6 | 4 | 1-2 | 3-4 | 1 | 1 |

Dieses Beispiel einer Polymerzusammensetzung bzw. eines Polymercompounds betrifft eine Folientype für die Blasfolienherstellung. Die in bezug auf Tabelle 8 bereits erwähnte Nichtlinearität der Polymer-Füllstoff-Masterbatch-Zusammensetzungen in Hinblick auf die prozentualen Anteile des Masterbatches, der grundsätzlich auch einen Füllstoff darstellt, zeigt sich auch hier deutlich. Mit Versuch P25 wurde ein sehr gutes Gesamtprofil der Eigenschaften mit ausgewogenen Meßergebnissen erzielt, das im Vergleich noch besser ist als z. B. bei den Versuchen P23, P24 mit 20 % Masterbatch.

Verglichen mit dem Vergleichsversuch V16 zeigen aber auch P23, P24 deutlich bessere Werte. Mit einer Reißdehnung von nur 0,2 ist bei dem Material gemäß dem genannten Vergleichsversuch die Folienstabilität nicht gewährleistet.

**Tabelle 10 mit unpolarem (Null-) Polymer:**

| Beispiel | V17 | V18 | P28 | P29 | P31 | P32 | P33 |
|---|---|---|---|---|---|---|---|
| | [%] | [%] | [%] | [%] | [%] | [%] | [%] |
| Eltex KL 104 | 100 | 95 | 95 | 95 | 80 | 90 | 90 |
| Nanofil 5 | | 5 | | | | | |
| PU-MB, Bsp. 5 | | | 5 | | 20 | | |
| PU MB, Bsp. 8 | | | | 5 | | | |
| PO-MB, Bsp. 18 | | | | | | 10 | |
| PO-MB, Bsp.20 | | | | | | | 10 |
| | | | | | | | |
| Schmelzindex g/10 Min | 2 | 18 | 24 | 25 | 31 | 28 | 24 |
| 190/10 | | | | | | | |
| Zugfestigkeit N/mm² | 31 | 23 | 24,5 | 31,5 | 20,5 | 28 | 29 |
| Reißdehnung m/m | 16 | 10 | 11 | 15 | 12 | 10 | 8,0 |
| Pickeltest Note visuell | 1 | 6 | 1-2 | 1-2 | 1-2 | 1 | 1 |

In Tabelle 10 ist mit Eltex KL 104 ein Polypropylen angegeben, wie es für den Spritzguß und das Extrudieren verwendet wird. Das ausgewogenste Eigenschaftsprofil lässt sich auch mit den erfindungsgemäßen Polymerzusammensetzungen bzw. Polymercompounds mit Zusammensetzungen gemäß den Versuchen P28 - P30 erreichen. Die Nichtlinearität ist daher auch hier zu beobachten.

Mit P30 wird demgegenüber ein herausragender Wert für den Schmelzindex erreicht, während die Reißdehnung hier ungünstiger ausfällt. Diese ist allerdings für die genannte Verarbeitung nicht entscheidend. Die Reißdehnung wird bei Polypropylen grundsätzlich über die Extrusion selbst eingestellt.

Grundsätzlich läßt sich feststellen, daß die unter Verwendung von Pulver- oder Polymer-Masterbatchen hergestellte Polymere, Polymerzusammensetzungen bzw. Compounds wesentliche Vorteile gegenüber den im Stand der Technik bisher bekannten, nur mit Nanoclays als Füllstoffen hergestellten Polymeren, Polymerzusammenstetzungen bzw. Compounds aufweisen. Sie lassen sich besser verarbeiten, sind im wesentlichen staubfrei und zeigen ein relativ hohes Schüttgewicht (unverdichtet).

## Patentansprüche

1. Zusammensetzung enthaltend mindestens einen Nanoclay aus einem quellfähigen anorganischen Schichtmaterial, das mit mindestens einer Siloxan-Komponente und mindestens einem nicht-anionischen Fettsäurederivat, das mindestens einen aliphatischen oder cyclischen Rest mit 6 bis 32 Kohlenstoffatomen aufweist, modifiziert worden ist.

2. Zusammensetzung nach Anspruch 1, **dadurch gekennzeichnet, dass** das enthaltene Nanoclay eine mittlere Teilchengröße von 0,1 bis 1000 µm, bevorzugt 0,1 bis 100 µm, besonders bevorzugt von 1 bis 15 µm und ganz besonders bevorzugt von 2 bis 10 µm aufweist.

3. Zusammensetzung nach Anspruch 1 oder 2, **dadurch gekennzeichnet, dass** das enthaltene Nanoclay gemahlenes Nanoclay umfaßt.

4. Zusammensetzung nach einem der Ansprüche 1 bis 3, **dadurch gekennzeichnet, dass** das anorganische Schichtmaterial ausgewählt ist aus natürlichen oder synthetischen Schichtsilikaten.

5. Zusammensetzung nach einem der vorstehenden Ansprüche, **dadurch gekennzeichnet, dass** das nicht-anionische Fettsäurederivat ausgewählt ist aus der Gruppe der Derivate der gesättigten oder ungesättigten Fettsäuren, und der Polymerfettsäuren.

6. Zusammensetzung nach einem der vorstehenden Ansprüche, **dadurch gekennzeichnet, dass** das nicht-anionische Fettsäurederivat ausgewählt ist aus der Gruppe der Fettalkohole, Fettamine, Triglyceridester, Fettsäurealkylester und Wachse.

7. Zusammensetzung nach einem der vorstehenden Ansprüche, **dadurch gekennzeichnet, dass** das nicht-anionische Fettsäurederivat mindestens einen aliphatischen oder cyclischen Rest mit 8 bis 22 Kohlenstoffatomen aufweist.

8. Zusammensetzung nach einem der vorstehenden Ansprüche, **dadurch gekennzeichnet, dass** das nicht-anionische Fettsäurederivat mindestens einen aliphatischen oder cyclischen Rest mit insbesondere mit 10 bis 18 Kohlenstoffatomen aufweist.

9. Zusammensetzung nach einem der vorstehenden Ansprüche, **dadurch gekennzeichnet, dass** das Fettsäurederivat abgeleitet ist aus Fettsäuren mit 10 bis 30 Kohlenstoffatomen.

10. Zusammensetzung nach einem der vorstehenden Ansprüche, **dadurch gekennzeichnet, dass** das Fettsäurederivat ausgewählt ist aus hydrogenierten Derivaten, Alkoholderivaten, Aminderivaten, oder deren Mischungen.

11. Zusammensetzung nach einem der vorstehenden Ansprüche, **dadurch gekennzeichnet, dass** die Fettsäurederivate abgeleitet sind aus der Gruppe der polymeren Fettsäuren, der Ketofettsäuren, der Fettsäurealkyloxazoline und Fettsäurealkylbisoxazoline, oder deren Mischungen.

12. Zusammensetzung nach einem der vorstehenden Ansprüche, **dadurch gekennzeichnet, dass** die Siloxan-Komponente ausgewählt ist aus der Gruppe der oligomeren oder der polymeren Siloxane bzw. Siloxanderivate, insbesondere bestehend aus Oligoalkylsiloxanen, Polydialkylsiloxanen, Polyalkylarylsiloxanen, Polydiarylsiloxanen, oder deren Mischungen.

13. Zusammensetzung nach einem der vorstehenden Ansprüche, **dadurch gekennzeichnet, dass** die Siloxan-Komponente ausgewählt ist aus zumindest mit einer reaktiven Gruppe funktionalisierten Siloxanderivaten.

14. Zusammensetzung nach einem der vorstehenden Ansprüche, **dadurch gekennzeichnet, dass** das Additiv oder die Additivmischung weiterhin mindestens eine weitere Komponente, insbesondere zur Verbesserung der Fließfähigkeit bei der Verarbeitung in einem Polymer enthält, vorzugsweise eine Komponente aus der Gruppe der Ethylen-Propylen-Copolymere (EPM), der Ethylen-Propylen-Terpolymere (EPDM), der thermoplastischen Elastomere, der Haftvermittler, der Vemetzungsmittel, oder deren Mischungen enthält.

15. Zusammensetzung nach Anspruch 14, **gekennzeichnet durch** ein mittleres Molekulargewicht von EPM und/oder EPDM von weniger als 20.000.

16. Zusammensetzung nach Anspruch 14 oder 15, **gekennzeichnet durch** ein Verhältnis von Ethylen zu Propylen in EPM und/oder EPDM von 40 : 60 bis 60 : 40.

17. Zusammensetzung in Form einer im wesentlichen homogenen Mischung des pre-exfolierten Nanoclays gemäß einem der Ansprüche 1 bis 16 mit einem Polymerpulver.

18. Polymerhaltige Zusammensetzung, die durch Compoundierung der Zusammensetzung gemäß einem der Ansprüche 1 bis 17 mit einem vorherbestimmten Trägerpolymer erhalten worden ist.

19. Polymerhaltige Zusammensetzung nach Anspruch 18, **dadurch gekennzeichnet, dass** das vorherbestimmte Trägerpolymer ausgewählt ist aus Polyethylen-Ethylenvinylacetat-Copolymer (EVA), Ethylenethylacrylat-Copolymer (EEA), Ethylenmethylacrylat-Copolymer (EMA), Ethylenbutylacrylat-Copolymer (EBA), deren mit Maleinsäureanhydrid (MAH) modifizierten Derivaten, Ionomeren, Styrol-Elastomer-Systemen, Ether-Ester-Blockcopolymeren, Polyether-Polyamid-BlockCopolymeren (PEBA), Mischungen von thermoplastischen Polymeren, thermoplastischen Polyurethanelastomeren, thermoplastischem Siliconkautschuk, oder deren Mischungen.

20. Polymerhaltige Zusammensetzung nach Anspruch 18 oder 19, **gekennzeichnet durch** einen Anteil des Trägerpolymers von 10 bis 90 Gew.-%, vorzugsweise 40 bis 70 Gew.-%.

21. Polymerhaltige Zusammensetzung nach einem der Ansprüche 18 bis 20 in Granulatform.

22. Verwendung der Zusammensetzung nach einem der Ansprüche 1 bis 17 oder der polymerhaltigen Zusammensetzung nach einem der Ansprüche 18 bis 21 als Füllstoff in Polymeren oder Polymerzusammensetzungen.

23. Verwendung der Zusammensetzung nach einem der Ansprüche 1 bis 17 oder der polymerhaltigen Zusammensetzung nach einem der Ansprüche 18 bis 21 in Füllstoff-Systemen für Polymere oder Polymerzusammensetzungen.

24. Verwendung nach Anspruch 23 in Kombination mit einem flammhemmenden halogenhaltigen oder halogenfreien Füllstoff.

25. Verwendung nach Anspruch 24, **gekennzeichnet durch** einen halogenfreien Füllstoff.

26. Verwendung nach Anspruch 25, **dadurch gekennzeichnet, dass** der halogenfreie flammhemmende Füllstoff ausgewählt ist aus Aluminiumhydroxid, Aluminiumoxihydrat (Böhmit), Magnesiumhydroxid, Magnesiumoxid, Brucit, Magnesiumcarbonat, Hydromagnesit, Huntit, Bauxit, Calciumcarbonat, Talk, Glaspulver, Melaminisocyanuraten, deren Derivaten und Zubereitungen, Boraten, Stannaten und Hydroxystannaten, Phosphaten, oder deren Mischungen.

27. Verwendung nach Anspruch 22 als Füllstoff in Polyolefinen und deren Mischungen, technischen Kunststoffen und deren Mischungen sowie Legierungen.

28. Verwendung nach Anspruch 22 oder 23 für Elastomere und Duroplaste.

29. Verwendung nach einem der Ansprüche 22 bis 28, **gekennzeichnet durch** einen Anteil des pre-exfolierten Nanoclays von 0,1 - 50 Gew.%, vorzugsweise 0,1 - 15 Gew.%, in dem fertigen Polymer oder der Polymerzusammensetzung.

30. Zusammensetzung nach einem der Ansprüche 1 bis 17 oder polymerhaltige Zusammensetzung nach einem der Ansprüche 18 bis 20, **dadurch gekennzeichnet, dass** es sich um eine pulverförmige Masterbatch handelt.

## Claims

1. Composition containing at least one nanoclay of a swellable inorganic sheet material that has been modified with at least one siloxane component and at least one non-anionic fatty acid derivative that contains at least one aliphatic or cyclic radical with 6 to 32 carbon atoms.

2. Composition according to claim 1, **characterised in that** the contained nanoclay has a mean particle size of 0.1 to 1000 µm, preferably 0.1 to 100 µm, particularly preferably 1 to 15 µm and most particularly preferably 2 to 10 µm.

3. Composition according to claim 1 or 2, **characterised in that** the contained nanoclay comprises ground nanoclay.

4. Composition according to one of claims 1 to 3, **characterised in that** the inorganic sheet material is selected from natural or synthetic phyllosilicates.

5. Composition according to one of the preceding claims, **characterised in that** the non-anionic fatty acid derivative is selected from the group comprising derivatives of saturated or unsaturated fatty acids, and polymeric fatty acids.

6. Composition according to one of the preceding claims, **characterised in that** the non-anionic fatty acid derivative is selected from the group comprising aliphatic alcohols, fatty amines, triglyceride esters, fatty acid alkyl esters and waxes.

7. Composition according to one of the preceding claims, **characterised in that** the non-anionic fatty acid derivative comprises at least one aliphatic or cyclic radical with 8 to 22 carbon atoms.

8. Composition according to one of the preceding claims, **characterised in that** the non-anionic fatty acid derivative comprises at least one aliphatic or cyclic radical with in particular 10 to 18 carbon atoms.

9. Composition according to one of the preceding claims, **characterised in that** the fatty acid derivative is derived from fatty acids with 10 to 30 carbon atoms.

10. Composition according to one of the preceding claims, **characterised in that** the fatty acid derivative is selected from hydrogenated derivatives, alcohol derivatives, amine derivatives, or their mixtures.

11. Composition according to one of the preceding claims, **characterised in that** the fatty acid derivatives are derived from the group comprising polymeric fatty acids, ketofatty acids, fatty acid alkyloxazolines and fatty acid alkylbisoxazolines, or their mixtures.

12. Composition according to one of the preceding claims, **characterised in that** the siloxane component is selected from the group comprising oligomeric or polymeric siloxanes or siloxane derivatives, in particular consisting of oligoalkylsiloxanes, polydialkylsiloxanes, polyalkylarylsiloxanes, polydiarylsiloxanes, or their mixtures.

13. Composition according to one of the preceding claims, **characterised in that** the siloxane component is selected from siloxane derivatives functionalised with at least one reactive group.

14. Composition according to one of the preceding claims, **characterised in that** the additive or the additive mixture furthermore contains at least one further component, in particular for improving the flowability during processing in a polymer, preferably a component from the group comprising ethylene-propylene copolymers (EPM), ethylene-propylene terpolymers (EPDM), thermoplastic elastomers, coupling agents, crosslinking agents, or their mixtures.

15. Composition according to claim 14, **characterised by** a mean molecular weight of EPM and/or EPDM of less than 20 000.

16. Composition according to claim 14 or 15, **characterised by** a ratio of ethylene to propylene in EPM and/or EPDM of 40:60 to 60:40.

17. Composition in the form of a substantially homogenous mixture of the pre-exfoliated nanoclay according to one of claims 1 to 16 with a polymer powder.

18. Polymer-containing composition that has been obtained by compounding the composition according to one of claims 1 to 17 with a predetermined carrier polymer.

19. Polymer-containing composition according to claim 18, **characterised in that** the predetermined carrier polymer is selected from polyethylene-ethylene-vinyl acetate copolymer (EVA), ethylene-ethyl acrylate copolymer (EEA), ethylene-methyl acrylate copolymer (EMA), ethylene-butyl acrylate copolymer (EBA), their derivatives modified with maleic anhydride (MAH), ionomers, styrene elastomer systems, ether-ester block copolymers, polyether-polyamide block copolymers (PEBA), mixtures of thermoplastic polymers, thermoplastic polyurethane elastomers, thermoplastic silicone rubber, or their mixtures.

20. Polymer-containing composition according to claim 18 or 19, **characterised by** a proportion of the carrier polymer of 10 to 90 wt.%, preferably 40 to 70 wt. %.

21. Polymer-containing composition according to one of claims 18 to 20 in granular form.

22. Use of the composition according to one of claims 1 to 17 or of the polymer-containing composition according to one of claims 18 to 21 as filler in polymers or polymer compositions.

23. Use of the composition according to one of claims 1 to 17 or of the polymer-containing composition according to one of claims 18 to 21 in filler systems for polymers or polymer compositions.

24. Use according to claim 23 in combination with a flame-retarding halogen-containing or halogen-free filler.

25. Use according to claim 24, **characterised by** a halogen-free filler.

26. Use according to claim 25, **characterised in that** the halogen-free flame-retarding filler is selected from aluminium hydroxide, hydrated aluminium oxide (Böhmite), magnesium hydroxide, magnesium oxide, brucite, magnesium carbonate, hydromagnesite, huntite, bauxite, calcium carbonate, talcum, glass powder, melamine isocyanurates, their derivatives and preparations, borates, stannates and hydroxystannates, phosphates, or their mixtures.

27. Use according to claim 22 as filler in polyolefins and their mixtures, industrial plastics and their mixtures as well as alloys.

28. Use according to claim 22 or 23 for elastomers and thermosetting plastics.

29. Use according to one of claims 22 to 28, **characterised by** a proportion of the pre-exfoliated nanoclay of 0.1 - 50 wt.%, preferably 0.1 - 15 wt. %, in the finished polymer or polymer composition.

30. Composition according to one of claims 1 to 17 or polymer-containing composition according to one of claims 18 to 20, **characterised in that** it is a pulverulent master batch.

## Revendications

1. Composition contenant au moins une nano-argile en un matériau feuilleté inorganique apte au gonflement, qui est modifié avec au moins un composé siloxane et au moins un dérivé d'acide gras non anionique qui présente au moins un radical aliphatique ou cyclique avec 6 à 32 atomes de carbone.

2. Composition selon la revendication 1, **caractérisée en ce que** la nano-argile contenue présente une taille moyenne de particule de 0,1 à 1 000 µm, de préférence de 0,1 à 100 µm, plus préférablement de 1 à 15 µm et le plus préférablement de 2 à 10 µm.

3. Composition selon la revendication 1 ou 2, **caractérisée en ce que** la nano-argile contenue comprend de la nano-argile broyée.

4. Composition selon l'une quelconque des revendications 1 à 3, **caractérisée en ce que** le matériau feuilleté inorganique est choisi parmi des silicates feuilletés naturels ou synthétiques.

5. Composition selon l'une quelconque des revendications précédentes, **caractérisée en ce que** le dérivé d'acide gras non anionique est choisi dans le groupe des dérivés des acides gras saturés ou insaturés et des acides gras polymères.

6. Composition selon l'une quelconque des revendications précédentes, **caractérisée en ce que** le dérivé d'acide gras non anionique est choisi dans le groupe des alcools gras, amines grasses, esters de triglycérides, esters alkyliques d'acides gras et cires.

7. Composition selon l'une quelconque des revendications précédentes, **caractérisée en ce que** le dérivé d'acide gras non anionique présente au moins un radical aliphatique ou cyclique avec 8 à 22 atomes de carbone.

8. Composition selon l'une quelconque des revendications précédentes, **caractérisée en ce que** le dérivé d'acide gras non anionique présente au moins un radical aliphatique ou cyclique avec en particulier 10 à 18 atomes de carbone.

9. Composition selon l'une quelconque des revendications précédentes, **caractérisée en ce que** le dérivé d'acide gras est dérivé d'acides gras avec 10 à 30 atomes de carbone.

10. Composition selon l'une quelconque des revendications précédentes, **caractérisée en ce que** le dérivé d'acide gras est choisi parmi les dérivés hydrogénés, les dérivés alcools, les dérivés amines ou leurs mélanges.

11. Composition selon l'une quelconque des revendications précédentes, **caractérisée en ce que** les dérivés d'acide gras sont dérivés du groupe des acides gras polymères, des acides gras cétoniques, des alkyloxazolines d'acides gras et alkylbisoxazolines d'acides gras ou de leurs mélanges.

12. Composition selon l'une quelconque des revendications précédentes, **caractérisée en ce que** le composé siloxane est choisi dans le groupe des siloxanes oligomères ou polymères ou bien des dérivés siloxanes, composé notamment des oligoalkylsiloxanes, polydialkylsiloxanes, polyalkylarylsiloxanes, polydiarylsiloxanes ou de leurs mélanges.

13. Composition selon l'une quelconque des revendications précédentes, **caractérisée en ce que** le composé siloxane est choisi parmi les dérivés siloxanes fonctionnalisés avec au moins un groupe réactif.

14. Composition selon l'une quelconque des revendications précédentes, **caractérisée en ce que** l'additif ou le mélange additif contient en outre au moins un autre composé, notamment pour l'amélioration de la fluidité lors de la transformation en polymère, contient de préférence un composé du groupe des copolymères éthylène-propylène (EPM), des terpolymères éthylène-propylène (EPDM), des élastomères thermoplastiques, des agents de pontage, agents réticulants, ou de leurs mélanges.

15. Composition selon la revendication 14, **caractérisée par** une masse moléculaire moyenne de l'EPM et/ou de l'EPDM de moins de 20 000.

16. Composition selon la revendication 14 ou 15, **caractérisée par** un rapport éthylène sur propylène de 40:60 à 60:40 dans l'EPM et/ou l'EPDM.

17. Composition sous forme d'un mélange pour l'essentiel homogène de la nano-argile pré-exfoliée selon l'une quelconque des revendications 1 à 16 avec une poudre polymère.

18. Composition à base de polymère obtenue par mélange ("Compoundierung") de la composition selon l'une quelconque des revendications 1 à 17 avec un polymère support préalablement défini.

19. Composition à base de polymère selon la revendication 18, **caractérisée en ce que** le polymère support préalablement défini est choisi parmi les copolymères polyéthylène-Ethylène-acétate de vinyle (EVA), les copolymères éthylène-acrylate d'éthyle (EEA), les copolymères éthylène-acrylate de méthyle (EMA), les copolymères éthylène-acrylate de butyle (EBA), leurs dérivés modifiés avec de l'anhydride maléique (MAH), les ionomères, les systèmes styrène-élastomère, les copolymères séquencés éther-ester, les copolymères séquencés polyéther-polyamide (PEBA), les mélanges de polymères thermoplastiques, les polyuréthanes élastomères thermoplastiques, les caoutchoucs au silicone thermoplastiques, ou leurs mélanges.

20. Composition à base de polymère selon la revendication 18 ou 19, **caractérisée par** une proportion de polymère support de 10 à 90 % en poids, de préférence de 40 à 70 % en poids.

21. Composition à base de polymère selon l'une quelconque des revendications 18 à 20 sous forme de granulés.

22. Utilisation de la composition selon l'une quelconque des revendications 1 à 17 ou de la composition à base de polymère selon l'une quelconque des revendications 18 à 21 comme charge dans des polymères ou des compositions de polymères.

23. Utilisation de la composition selon l'une quelconque des revendications 1 à 17 ou de la composition à base de polymère selon l'une quelconque des revendications 18 à 21 dans des systèmes de charge pour des polymères ou des compositions de polymères.

24. Utilisation selon la revendication 23 en combinaison avec une charge ignifugeante halogénée ou non.

25. Utilisation selon la revendication 24, **caractérisée par** une charge exempte d'halogènes.

26. Utilisation selon la revendication 25, **caractérisée en ce que** la charge ignifugeante exempte d'halogènes est choisie parmi l'hydroxyde d'aluminium, l'oxyhydrate d'aluminium (Boehmite), l'hydroxyde de magnésium, l'oxyde de magnésium, la brucite, le carbonate de magnésium, l'hydromagnésite, la huntite, la bauxite, le carbonate de calcium, le talc, la poudre de verre, les isocyanurates de mélamine, leurs dérivés et préparations, les borates, les stannates et hydroxystannates, les phosphates, ou leurs mélanges.

27. Utilisation selon la revendication 22 comme charge dans des polyoléfines et leurs mélanges, dans des plastiques techniques et leurs mélanges ainsi que dans des alliages.

28. Utilisation selon la revendication 22 ou 23 pour des élastomères et des matières plastiques thermodurcissables.

29. Utilisation selon l'une quelconque des revendications 22 à 28, **caractérisée par** une proportion de nano-argile pré-exfoliée de 0,1 à 50 % en poids, de préférence de 0,1 à 15 % en poids, dans un polymère fini ou dans une composition polymère.

30. Composition selon l'une quelconque des revendications 1 à 17 ou composition à base de polymère selon l'une quelconque des revendications 18 à 20, **caractérisée en ce qu'**il s'agit d'un mélange maître pulvérulent.
